# EUROPÄISCHE PATENTSCHRIFT

(11) **EP 1 702 012 B1**
(45) Veröffentlichungstag und Bekanntmachung des Hinweises auf die Patenterteilung: **07.09.2016**
(21) Anmeldenummer: 05706834.8
(22) Anmeldetag: 04.01.2005
(51) Int. Cl.: C09D 1/02

(54) **METALLISCHE SUBSTRATE MIT VERFORMBARER GLASARTIGER BESCHICHTUNG**
METALLIC SUBSTRATES COMPRISING A DEFORMABLE GLASS-TYPE COATING
SUBSTRATS MÉTALLIQUES POURVUS D'UN REVÊTEMENT DU TYPE VERRE DÉFORMABLE

(30) Priorität: 05.01.2004 DE 102004001097
(43) Veröffentlichungstag der Anmeldung: 20.09.2006
(73) Patentinhaber: EPG (Engineered nanoProducts Germany) AG, 64347 Griesheim (DE)
(72) Erfinder: ENDRES, Klaus, 66424 Homburg (DE); SCHMIDT, Helmut, 66130 Saarbrücken-Güdingen (DE); MENNIG, Martin, 66287 Quierschied (DE)
(74) Vertreter: Held, Stephan
(86) Internationale Anmeldenummer: PCT/EP2005/000024
(87) Internationale Veröffentlichungsnummer: WO 2005/066388

(56) Entgegenhaltungen:
- EP-A- 0 368 101
- EP-A1- 1 284 307
- DE-A1- 10 059 487
- DE-A1- 19 714 949
- US-A- 5 614 251
- KOJIMA ET AL: "Silicate-based coatings with excellent resistance to staining by food" CHEMICAL ABSTRACTS + INDEXES, AMERICAN CHEMICAL SOCIETY. COLUMBUS, US, Bd. 2, Nr. 124, 8. Januar 1996 (1996-01-08), XP002072046 ISSN: 0009-2258
- KURAMOTO ET AL: "Fine silica sphere-containing alkoxysilane coatings" CHEMICAL ABSTRACTS + INDEXES, AMERICAN CHEMICAL SOCIETY. COLUMBUS, US, Bd. 22, Nr. 113, 26. November 1990 (1990-11-26), XP002072047 ISSN: 0009-2258

## Beschreibung

Die Erfindung betrifft metallische Substrate mit einer verformbaren, insbesondere auch kaltverformbaren, glasartigen Beschichtung, ein Verfahren zu deren Herstellung und deren Verwendung.

Glasartige Schichten auf Metallsubstraten wie Stahl oder Aluminium werden in der Regel über Emaillierungsprozesse hergestellt. Dazu wird auf eine vorher aufgebrachte Haftschicht eine partikelhaltige Zusammensetzung aufgetragen, die beim Erhitzen zu einem Glas aufschmilzt. Um geschlossene, dichte Schichten zu erhalten, müssen jedoch die Schichtdicken in der Regel > 50 µm sein. Hierdurch werden die Schichten aber unflexibel und spröde, sie sind gegen Biegen, Schlag und Stoß empfindlich und platzen ab. Auch durch thermische Spritzverfahren sind keine verformbaren Schichten herstellbar.

Es wurden auch verschiedene Untersuchungen zum Auftrag dünner anorganischer Schichten auf Stahloberflächen über das Sol-Gel-Verfahren durchgeführt. So wurde z. B. versucht, Zirkondioxidschichten zur Verbesserung der Korrosionsbeständigkeit auf Edelstahl aufzutragen. Auch Borosilikatglasschichten wurden untersucht. Es zeigte sich jedoch, dass die refraktären Systeme (hochschmelzende Oxide wie ZrO₂) über diese Techniken nicht zu dichten Schichten führen und dass die Borosilikatglasschichten nur in Schichtdicken deutlich unter 1 µm auftragbar sind, so dass kein ausreichender mechanischer und chemischer Schutz gewährleistet ist. Diese Verfahren haben daher keine technische Bedeutung erlangt.

Weiter ist bekannt, dass man mit speziellen Alkaliionen-haltigen SiO₂-Beschichtungssolen, die kolloidale SiO₂-Partikel enthalten, transparente, rissfreie und auch eindimensional biegbare glasartige Schichten mit Schichtdicken im unteren µm-Bereich auf Metalloberflächen herstellen kann; siehe DE 19714949 A1 und DE 10059487 A1. Die in den dort verwendeten Beschichtungssolen enthaltenen Nanopartikel können dem Sol aus einer externen Quelle zugeführt oder aber in-situ erzeugt werden. Die Schichten werden mit üblichen Techniken appliziert und nach einem Trocknungsschritt bei Temperaturen bis 500°C thermisch verdichtet. Dabei kann die thermische Verdichtung entweder in Luft oder alternativ in sauerstofffreier Stickstoffatmosphäre erfolgen. Die so hergestellten Beschichtungen eignen sich nur für technische Anwendungen, in denen eine beschränkte hydrolytische Beständigkeit und keine feuchteempfindliche Abriebfestigkeit erforderlich ist und bei denen das optische Aussehen nur eine untergeordnete Rolle spielt.

So hat sich z. B. gezeigt, dass bei Schichten auf Edelstahl, die bei 500°C an der Luft verdichtet wurden, zwar eine gute Kratzfestigkeit besitzen (< 150 µm im IEC-Test mit 20 N und Wolframcarbidspitze, 1 mm Radius), sie aber bei näherer Betrachtung gut erkennbare Verfärbungen in verschiedenen Grau- bis Brauntönen aufweisen, die mehr oder weniger homogen bzw. auch inhomogen, d. h. fleckig, auftreten können. Außerdem stellt man nach etwa 1-stündigem Kochen in Leitungswasser fest, dass die Kratzfestigkeit deutlich sinkt (≥ 230 µm im IEC-Test mit 20 N und Wolframcarbidspitze, 1 mm Radius), die Schicht ihr Aussehen verändert und sich partiell vom Substrat lösen kann.

Andererseits ist festzustellen, dass bei 500°C unter N₂-Atmosphäre verdichtete Schichten zwar die oben beschriebenen leichten Verfärbungen nicht zeigen, dafür aber sehr schlechte chemische Stabilität besitzen.

In beiden Fällen ist eine Kaltverformung der Beschichtung z. B. auf Edelstahlblech nicht möglich. Die Schichten platzen schon bei Biegeradien von < 5 mm (zweidimensional) ab.

Offensichtlich beruhen diese unbefriedigenden Eigenschaften der Beschichtungen auf einer inhomogenen, ungeeigneten und nicht-reproduzierbaren Mikrostruktur der Schichten. Eine exakte Analytik ist nicht möglich, da die Schichten glasartig und damit röntgenamorph sind. Die Struktureinheiten liegen im unteren nm-Bereich und sind aufgrund ihrer chemischen Zusammensetzung (Alkalisilikat) selbst für höchstauflösende Transmissionselektronenmikroskopie sehr kontrastarm.

Aufgrund dieser unbefriedigenden Eigenschaften entstehen gravierende Nachteile bei der nachträglichen Verarbeitung beschichteter Metallsubstrate. So können z. B. keine tiefziehähnlichen Umformungsprozesse durchgeführt werden. Ebenso ist eine Anwendung in heißem wässerigem Milieu nur begrenzt möglich.

Der Erfindung lag deshalb die Aufgabe zugrunde, metallische Substrate mit einer verformbaren glasartigen Beschichtung mit verbesserten mechanischen und chemischen Eigenschaften bereitzustellen.

EP-A-0368101 beschreibt eine zweischichtige Beschichtung auf Metallgegenständen. Die erste Grundschicht wird aus einer kolloidalen Lösung von Natriumsilicat und Silicasol gebildet, die bei 150 bis 300°C für 30 bis 120 min wärmebehandelt wird, um eine glasartige Schicht zu erhalten Die Deckschicht wird aus dem Kondensat einer organischen Silicatesterverbindung gebildet, die zur Vernetzung bei 150 bis 300°C für 30 bis 120 min wärmebehandelt wird.

JP-A-94-21431 betrifft gemäß Chemical Abstracts + Indexes, Bd. 2, Nr. 124, 8. Januar 1996, Beschichtungen für die Innenwände von Mikrowellenöfen. Die eingesetzte Beschichtungszusammensetzung umfasst u.a. Organosilane, Kieselsäureester, kolloidales SiO₂ und Alkali- oder Erdalkalinitrate und wird 20 min bei 250°C gebrannt.

JP-A-88-247402 betrifft gemäß Chemical Abstracts + Indexes, Bd. 22, Nr. 113, 26. November 1990, Beschichtungen mit guter Haftung an Glas, Metall oder Kunsstoff. Die beschriebene Beschichtungszusammensetzung wird durch Hydrolyse von Organosilanen in Anwesenheit von SiO₂-Teilch und unter basischer Katalyse hergestellt.

Gegenstand der Erfindung ist ein metallisches Substrat mit einer verformbaren glasartigen Beschichtung, erhältlich durch Auftragen eines Alkalisilikat-haltigen Beschichtungssols auf das Substrat, Trocknen der aufgetragenen Beschichtungszusammensetzung bei einer Temperatur von bis zu 100°C und thermische Verdichtung der so erhaltenen Schicht in einem zweistufigen Wärmebehandlungsverfahren, wobei die Wärmebehandlung in der ersten Stufe entweder (A) in einer sauerstoffhaltigen Atmosphäre oder (B) im Vakuum bei einem Restdruck ≤ 15 mbar durchgeführt wird und in der zweiten Stufe die weitere Verdichtung in einer sauerstoffarmen Atmosphäre bis zur vollständigen Verdichtung unter Ausbildung einer glasartigen Schicht durchgeführt wird.

In der ersten Wärmebehandlungsstufe werden bestimmte, die Strukturbildung und damit die Schichteigenschaften störende organische Reste bzw. Komponenten, die beispielsweise von nicht vollständig hydrolysierten Precursoren oder von Beschichtungsadditiven wie z.B. Tensiden, Verlaufsmitteln oder Lösungsmitteln herrühren, vollständig oder bis auf einen gewünschten, sehr geringen Restgehalt thermisch entfernt. Dies erfolgt erfindungsgemäß in der Variante A in einer sauerstoffhaltigen Atmosphäre mit einem Sauerstoffgehalt von z.B. 15 bis 90 Vol-%, vorzugsweise 19 bis 20 Vol-%, bis zu einer Endtemperatur von etwa 400°C oder alternativ in der Variante B im Vakuum bei einem Restdruck ≤ 15 mbar, vorzugsweise ≤ 5 mbar und besonders bevorzugt ≤2,5 mbar, bis zu einer Endtemperatur von etwa 500°C, vorzugsweise bis zu etwa 200°C und besonders bevorzugt bis zu etwa 120°C.

In der zweiten Wärmebehandlungstufe erfolgt eine weitere Verdichtung unter Ausbildung einer glasartigen Schicht. Die zweite Wärmebehandlungsstufe wird in einer sauerstoffarmen Atmosphäre bis zu einer Endtemperatur im Bereich von 400 bis 600°C, vorzugsweise 500 bis 600°C und besonders bevorzugt 540 bis 560°C durchgeführt. Als sauerstoffarme Atmosphäre wird eine sauerstofffreie Atmosphäre oder eine Atmosphäre mit nur sehr geringem Sauerstoffgehalt (≤ 0,5 Vol-%) verstanden. Vorzugsweise wird als sauerstoffarme Atmosphäre ein Inertgas wie Stickstoff oder Argon oder Vakuum mit einem Luftdruck ≤ 10 mbar angewandt.

Die Verweilzeiten bei den maximalen Temperaturen betragen üblicherweise 5 bis 75 min, vorzugsweise 20 bis 60 min und besonders bevorzugt 45 bis 60 min.

Die Abkühlphase von etwa 400 bis 500°C abwärts kann sowohl in sauerstoffarmer Atmosphäre (z.B. unter Inertgas, wie Stickstoff) oder auch in sauerstoffhaltiger Atmosphäre (z. B. durch Einblasen von Pressluft) erfolgen. Dadurch kann zum einen die Abkühlgeschwindigkeit gesteuert werden, zum anderen gelingt es, den hydrophilen bzw. hydrophoben Charakter der Beschichtung gezielt einzustellen, indem man eine bestimmte Menge an hydrophoben organischen Resten, die während der mit Sauerstoff arbeitenden Aufheizphase nicht vollständig oxidiert wurden, an der Oberfläche belässt. Die Abkühlgeschwindigkeit liegt im allgemeinen bei 1 bis 10 K/min, vorzugsweise 2 bis 7 K/min.

Auf diese Weise ist es mit beiden Varianten der thermischen Verdichtung erstmals möglich, kaltverformbare glasartige Schichten auf Metall herzustellen. Diese Eigenschaft kann nicht allein auf die Schichtdicke zurückgeführt werden, denn sie ist z. B. an aus der Displaytechnik bekannten Dünngläsern nicht zu beobachten. Auch ist sie mit Beschichtungssolen analoger chemischer Zusammensetzung, die nach den in DE 19714949 A1 und DE 10059487 A1 beschriebenen Verfahren verdichtet worden sind, nicht erzielbar. Ohne an eine bestimmte Theorie gebunden sein zu wollen, werden als mögliches Strukturmodell für dieses neue Schichtmaterial nanoskalige SiO₂-Struktureinheiten vermutet, die über Alkaliionen weniger gerichtet miteinander und damit leichter "verschiebbar" miteinander verknüpft sind, so dass ein glasartig hartes, aber dennoch in Grenzen plastisch dreidimensional verformbares Schichtmaterial entsteht. Sind noch organische Restgruppen (z. B. Methyl- oder Phenylgruppen) verblieben, so können zusätzliche Trennstellen entstehen und zur Erhöhung der Flexibilität beitragen. Außerdem ist es möglich, das optische Aussehen einerseits und die Kratzfestigkeit und hydrolytische Beständigkeit andererseits unabhängig voneinander einzustellen.

Als Alkalisilikat-haltiges Beschichtungssol wird vorzugsweise eine Beschichtungszusammensetzung verwendet, die durch Hydrolyse und Polykondensation von mindestens einem organisch modifizierten hydrolysierbaren Silan in Anwesenheit von Alkalimetall- oder Erdalkalimetalloxiden oder -hydroxiden und gegebenenfalls nanoskaligen SiO₂-Teilchen erhalten wird.

Eine derartige Beschichtungszusammensetzung ist z.B. erhältlich durch Hydrolyse und Polykondensation eines oder mehrerer Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere,
in Anwesenheit von
a) mindestens einer Verbindung aus der Gruppe der Oxide und Hydroxide der Alkaliund Erdalkalimetalle und gegebenenfalls
b) zugesetzten nanoskaligen SiO₂-Teilchen.

Damit können glasartige Schichten auf metallischen Oberflächen erhalten werden, deren Dicke z.B. bis zu 10 µm betragen kann, ohne dass bei der Trocknung und beim Verdichten Rissbildung auftritt. Die aufgetragenen Beschichtungszusammensetzungen können zum Beispiel auf Edelstahl- oder Stahloberflächen schon bei relativ niedrigen Temperaturen (in der Regel ab 400°C) in dichte SiO₂-Filme umgewandelt werden. Die erfindungsgemäß hergestellten Schichten haben in der Regel eine Dicke von 1 bis 6 µm, vorzugsweise 1,5 bis 5 µm und insbesondere 2,5 bis 4,5 µm. Sie bilden eine hermetisch abschließende Schicht, die auch bei höheren Temperaturen den Sauerstoffzutritt an die metallische Oberfläche verhindert bzw. drastisch reduziert und einen hervorragenden Korrosionsschutz gewährleistet. Die erhaltenen Schichten sind abriebfest und flexibel, so dass Biegungen oder Abknickungen der Oberfläche zu keinerlei Rissen oder Beeinträchtigungen der Schicht führen.

Als erfindungsgemäß zu beschichtende metallische Oberfläche eignen sich alle aus einem Metall oder einer Metalllegierung bestehenden bzw. dieses oder diese umfassenden Oberflächen von Halbzeugen und Fertigprodukten. Als Beispiele für Oberflächen aus Metall können solche aus Aluminium, Zinn, Zink, Kupfer, Chrom oder Nickel, einschließlich verzinkter, verchromter oder emaillierter Oberflächen, genannt werden. Beispiele für Metalllegierungen sind insbesondere Stahl bzw. Edelstahl, Aluminium-, Magnesium- und Kupferlegierungen wie Messing und Bronze. Besonders bevorzugt werden metallische Oberflächen aus Stahl, Edelstahl, verzinktem, verchromtem oder emailliertem Stahl verwendet.

Vorzugsweise wird die metallische Oberfläche vor dem Auftrag der Beschichtungszusammensetzung gründlich gereinigt und insbesondere von Fett und Staub befreit. Vor der Beschichtung kann auch eine Oberflächenbehandlung, z.B. durch CoronaEntladung, durchgeführt werden.

Die metallische Oberfläche bzw. das metallische Substrat kann eine ebene oder eine strukturierte Oberfläche aufweisen. Bevorzugt weist die metallische Oberfläche eine strukturierte Oberfläche auf. Es kann sich um eine mikrostrukturierte Oberfläche oder um eine Struktur größerer Dimensionen handeln. Die Struktur kann regelmäßig sein, wie sie z.B. durch Prägen erhalten wird, oder unregelmäßig sein, wie sie z.B. durch Aufrauen erhalten wird.

Die strukturierte metallische Oberfläche kann durch Behandlung von normalen metallischen Substraten mit innerhalb der Fehlergrenzen ebenen Oberflächen erhalten werden. Die Strukturierung der metallischen Oberflächen kann z.B. durch Aufrauen, Ätzen, Bestrahlen mit Laserlicht (Lasern) oder Prägen erfolgen. Eine Aufrauung der metallischen Oberfläche ist z. B. durch Sandstrahlen, Glasperlenstrahlen oder Bürsten möglich. Die Verfahren zur Strukturierung metallischer Oberflächen sind dem Fachmann bekannt. Durch die Strukturierung können z.B. dekorative Effekte erzielt werden.

Die Erfindung eignet sich insbesondere für die Herstellung glasartiger Oberflächenschichten auf Bauwerken und Teilen davon; Fortbewegungs- und Transportmitteln und Teilen davon; Arbeitsgerätschaften, Vorrichtungen und Maschinen für gewerbliche bzw. industrielle Zwecke und Forschung sowie Teilen davon; Haushaltsgegenständen und Arbeitsgerätschaften für den Haushalt sowie Teilen davon; Ausrüstung, Geräten und Hilfsmitteln für Spiel, Sport und Freizeit und Teilen davon; sowie Geräten, Hilfsmitteln und Vorrichtungen für medizinische Zwecke und Kranke.

Konkrete Beispiele für derartige beschichtungsfähige Materialien bzw. Gegenstände als Substrat werden im Folgenden angegeben. Bevorzugt handelt es sich bei den beschichteten Oberflächen um Oberflächen aus Stahl oder Edelstahl.

Bauwerke (insbesondere Gebäude) und Teile davon:
Innen- und Außenfassaden von Gebäuden, Fußböden und Treppen, Fahrtreppen, Aufzüge, z.B. deren Wände, Treppengeländer, Möbel, Verkleidungen, Beschläge, Türen, Griffe (insbesondere mit Anti-Fingerprint-Ausrüstungen, z.B. Türgriffe), Fassadenbleche, Bodenbeläge, Fenster (insbesondere Fensterrahmen, Fensterbänke und Fenstergriffe), Jalousien, Armaturen in Küche, Bad und WC, Duschkabinen, Sanitärzellen, WC-Kabinen, allgemein Gegenstände im Sanitärbereich (z.B. Toiletten, Waschbecken, Armaturen, Accessoires), Rohre (und insbesondere Abflußrohre), Heizkörper, Lichtschalter, Lampen, Beleuchtung, Briefkästen, Geldautomaten, Infoterminals, seewasserfeste Beschichtung für die Ausrüstung von Hafenanlagen, Dachrinnen, Regenrinnen, Antennen, Satellitenschüsseln, Handläufe von Geländern und Rolltreppen, Öfen, Windkraftanlagen, insbesondere Rotorblätter, Denkmäler, Skulpturen und allgemein Kunstwerke mit metallischen Oberflächen, insbesondere solche, die im Freien aufgestellt sind.

Fortbewegungs- und Transportmittel (z.B. Pkw, Lkw, Omnibus, Motorrad, Moped, Fahrrad, Eisenbahn, Straßenbahn, Schiff und Flugzeug) und Teile davon:
Schutzbleche von Fahrrädern und Motorrädern, Instrumente von Motorrädern, Türgriffe, Lenkräder, Reifenfelgen, Auspuffanlagen bzw. -rohre, temperaturbelastete Teile (Motorteile, Verkleidungen, Ventile und Ventildeckel), Beschläge, Latentwärmetauscher, Kühler, Teile der Innenausstattung mit metallischer Oberfläche (z.B. als Kratzfestbeschichtung), Tankstutzen, Gepäckträger, Dachcontainer für Pkws, Anzeigeinstrumente, Tankwagen, z.B. für Milch, Öl oder Säure, und allgemein sämtliche Karosserieteile sowie seewasserfeste Beschichtung für die Ausrüstung von Schiffen und Booten.

Arbeitsgerätschaften, Vorrichtungen und Maschinen (z.B. aus dem Anlagenbau (chemische Industrie, Lebensmittelindustrie, Kraftwerksanlagen) und der Energietechnik) für gewerbliche bzw. industrielle Zwecke und Forschung sowie Teile davon:
Wärmetauscher, Verdichterräder, Spaltwendeltauscher, Cu-Elemente zur industriellen Heizung, Formen (z.B. Gießformen, insbesondere aus Metall), Schütttrichter, Einfüllanlagen, Extruder, Wasserräder, Walzen, Transportbänder, Druckmaschinen, Siebdruckschablonen, Abfüllmaschinen, (Maschinen-)Gehäuse, Bohrköpfe, Turbinen, Rohre (innen und außen, insbesondere für Flüssigkeits- und Gastransport), Rührer, Rührkessel, Ultraschallbäder, Reinigungsbäder, Behälter, Transporteinrich-tungen in Öfen, Innenauskleidung von Öfen zum Hochtemperatur-, Oxidations-, Korrosions- und Säureschutz, Gasflaschen, Pumpen, Reaktoren, Bioreaktoren, Kessel (z.B. Brennstoffkessel), Wärmetauscher (z.B. in der Lebensmittelprozesstechnik oder für (Biomasse-)festbrennstoffkessel), Abluftanlagen, Sägeblätter, Abdeckungen (z.B. für Waagen), Tastaturen, Schalter, Knöpfe, Kugellager, Wellen, Schrauben, Solarzellen, Solaranlagen, Werkzeuge, Werkzeuggriffe, Flüssigkeitsbehälter, Isolatoren, Kapillaren, Laboreinrichtungen (z.B. Chromatographiesäulen und Abzüge) und Teile von Elektroakkumulatoren und Batterien.

Haushaltsgegenstände und Arbeitsgerätschaften für den Haushalt sowie Teile davon:
Mülleimer, Geschirr (z.B. aus Edelstahl), Bestecke (z.B. Messer), Tabletts, Pfannen, Töpfe, Backformen, Kochutensilien (z.B. Raspeln, Knoblauchpressen sowie Halterungen), Aufhängevorrichtungen, Kühlschränke, Kochfeldrahmen, Kochmulden, Heizplatten, Warmhalteflächen, Backöfen (innen und außen), Eierkocher, Mikrowellengeräte, Wasserkocher, Grillroste, Dampfgare, Öfen, Arbeitsflächen, Armaturen im Küchenbereich, Dunstabzugshauben, Blumenvasen, Gehäuse von TV-Geräten und Stereo-Anlagen, Gehäuse von (elektrischen) Haushaltsgeräten, Blumenvasen, Christbaumkugeln, Möbel, Möbelfronten aus Edelstahl, Spülen, Lampen und Leuchten.

Ausrüstung, Geräte und Hilfsmittel für Spiel, Sport und Freizeit:
Gartenmöbel, Gartengeräte, Werkzeuge, Spielplatzgeräte (z.B. Rutschen), Snowboards, Roller, Golfschläger, Hanteln, Gewichte, Trainingsgeräte, Beschläge, Sitzgelegenheiten in Parks, Spielplätzen, Einrichtungsgegenstände und Geräte in Schwimmbädern usw.

Geräte, Hilfsmittel und Vorrichtungen für medizinische Zwecke und Kranke:
Chirurgische Instrumente, Kanülen, medizinische Behälter, Spritzen, Implantate, zahnmedizinische Geräte, Zahnspangen, Brillengestelle, medizinische Bestecke (für Operationen und Zahnbehandlungen), Spiegel aus Metall (z.B. Edelstahl) als medizinische Spiegel, allgemein Gegenstände aus dem Bereich der Medizintechnik (z.B. Rohre, Apparate, Behälter) und Rollstühle, sowie ganz allgemein Krankenhauseinrichtungen zwecks Verbesserung der Hygiene.

Gegenstände, die eine elektrische Isolierung benötigen, z.B. Solarzellen und Kondensatoren. Die erfindungsgemäße Zusammensetzung kann hier als elektrisches Isoliermaterial in Form von Isolierschichten dienen.

Neben den obigen Gegenständen können natürlich auch andere Gegenstände und Teile davon vorteilhaft mit den obigen Oberflächenschichten versehen werden, wie z.B. Spielzeuge, Schmuck, Münzen, Spiegel aus Metall (z.B. Edelstahl) als Kosmetikspiegel oder Verkehrsspiegel, Urnen, Schilder (z.B. Verkehrsschilder), Ampelanlagen, Postkästen, Telefonhäuschen, Wartehäuschen für öffentliche Verkehrsmittel, Schutzbrillen, Schutzhelme, Raketen, allgemein alle Gegenstände aus Stahlblech, Uhrengehäuse, Uhrenarmbänder, Zifferblätter, Schreibgeräte aus Metall, insbesondere Edelstahl, Anzeigeinstrumente (Manometer, Thermometer) und elektrische und elektronische Schaltungen und Bauteile (z.B. integrierte Schaltungen oder Platinen und Teile davon).

Besondere Vorteile werden erfindungsgemäß bei der Beschichtung von metallischen Halbzeugen oder Fertigprodukten erzielt, die anschließend kaltverformt werden.

Im folgenden werden die Beschichtungszusammensetzung und deren Komponenten beschrieben.

Unter den obigen Silanen der allgemeinen Formel (I) befindet sich mindestens ein Silan, in dessen allgemeiner Formel n den Wert 1 oder 2 aufweist. In der Regel werden mindestens zwei Silane der allgemeinen Formel (I) in Kombination eingesetzt. In diesem Fall werden diese Silane bevorzugt in einem solchen Verhältnis eingesetzt, dass der Durchschnittswert von n (auf molarer Basis) 0,2 bis 1,5, vorzugsweise 0,5 bis 1,0, beträgt. Besonders bevorzugt ist ein Durchschnittswert von n im Bereich von 0,6 bis 0,8.

In der allgemeinen Formel (I) sind die Gruppen X, die gleich oder verschieden voneinander sind, hydrolysierbare Gruppen oder Hydroxylgruppen. Konkrete Beispiele für hydrolysierbare Gruppen X sind Halogenatome (insbesondere Chlor und Brom), Alkoxygruppen und Acyloxygruppen mit bis zu 6 Kohlenstoffatomen. Besonders bevorzugt werden Alkoxygruppen, insbesondere C₁₋₄-Alkoxygruppen wie Methoxy, Ethoxy, n-Propoxy und i-Propoxy. Vorzugsweise sind die Gruppen X in einem Silan identisch, wobei besonders bevorzugt Methoxy- oder Ethoxygruppen eingesetzt werden.

Bei den Gruppen R in der allgemeinen Formel (I), die im Falle von n = 2 gleich oder identisch sein können, handelt es sich um Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen. Konkrete Beispiele für derartige Gruppen sind Methyl, Ethyl, n-Propyl, i-Propyl, n-Butyl, sek.-Butyl und tert.-Butyl, Vinyl, Allyl und Propargyl, Phenyl, Tolyl und Benzyl. Die Gruppen können übliche Substituenten aufweisen, vorzugsweise tragen derartige Gruppen aber keinen Substituenten. Bevorzugte Gruppen R sind Alkylgruppen mit 1 bis 4 Kohlenstoffatomen, insbesondere Methyl und Ethyl, sowie Phenyl.

Erfindungsgemäß bevorzugt ist es, wenn mindestens zwei Silane der allgemeinen Formel (I) eingesetzt werden, wobei in einem Fall n = 0 und im anderen Fall n = 1 ist. Derartige Silan-Mischungen umfassen zum Beispiel mindestens ein Alkyltrialkoxysilan (z.B. (M)ethyltri(m)ethoxysilan) und ein Tetraalkoxysilan (z.B. Tetra-(m)ethoxysilan), die vorzugsweise in einem solchen Verhältnis eingesetzt werden, dass der Durchschnittswert von n in den oben angegebenen bevorzugten Bereichen liegt. Eine besonders bevorzugte Kombination für die Ausgangssilane der Formel (I) ist Methyltri(m)ethoxysilan und Tetra(m)ethoxysilan.

Die Hydrolyse und Polykondensation des oder der Silane der allgemeinen Formel (I) wird in Anwesenheit mindestens einer Verbindung aus der Gruppe der Oxide und Hydroxide der Alkali- und Erdalkalimetalle durchgeführt. Bei diesen Oxiden und Hydroxiden handelt es sich vorzugsweise um solche von Li, Na, K, Mg, Ca und/oder Ba. Vorzugsweise werden Alkalimetalle, insbesondere Na und/oder K verwendet. Bei Verwendung eines Alkalimetalloxids bzw. -hydroxids wird dieses vorzugsweise in einer solchen Menge eingesetzt, dass das Atomverhältnis Si : Alkalimetall im Bereich von 20:1 bis 7:1, inbesondere von 15:1 bis 10:1, liegt. In jedem Fall wird das Atomverhältnis von Silicium zu (Erd)alkalimetall so (groß) gewählt, dass der resultierende Überzug nicht wasserlöslich ist (wie beispielsweise im Falle von Wasserglas).

Die gegebenenfalls zusätzlich zu den hydrolysierbaren Silanen der allgemeinen Formel (I) verwendeten nanoskaligen SiO₂-Teilchen werden vorzugsweise in einer solchen Menge eingesetzt, dass das Verhältnis aller Si-Atome in den Silanen der allgemeinen Formel (I) zu allen Si-Atomen in den nanoskaligen SiO₂-Teilchen im Bereich von 5:1 bis 1:2, insbesondere 3:1 bis 1:1, liegt

Unter nanoskaligen SiO₂-Teilchen werden SiO₂-Teilchen mit einer durchschnittlichen Teilchengröße (bzw. einem durchschnittlichen Teilchendurchmesser) von vorzugsweise nicht mehr als 100 nm, bevorzugter nicht mehr als 50 nm und insbesondere nicht mehr als 30 nm verstanden. Hierfür können z.B. auch handelsübliche Kieselsäureprodukte, z.B. Kieselsole, wie die Levasile®, Kieselsole der Bayer AG, oder pyrogene Kieselsäuren, z.B. die Aerosil-Produkte von Degussa, verwendet werden. Die teilchenförmigen Materialien können in Form von Pulvern und Solen zugesetzt werden. Sie können aber auch in situ bei der Hydrolyse und Polykondensation der Silane gebildet werden.

Die Hydrolyse und Polykondensation der Silane können in Abwesenheit oder Anwesenheit eines organischen Lösungsmittels durchgeführt werden. Vorzugsweise ist kein organisches Lösungsmittel vorhanden. Bei Einsatz eines organischen Lösungsmittels sind die Ausgangskomponenten vorzugsweise im Reaktionsmedium (das in der Regel Wasser einschließt) löslich. Als organische Lösungsmittel eignen sich insbesondere mit Wasser mischbare Lösungsmittel wie beispielsweise ein- oder mehrwertige aliphatische Alkohole (wie beispielsweise Methanol, Ethanol), Ether (wie beispielsweise Diether), Ester (wie beispielsweise Ethylacetat), Ketone, Amide, Sulfoxide und Sulfone. Im übrigen können die Hydrolyse und Polykondensation gemäß den dem Fachmann geläufigen Modalitäten durchgeführt werden.

Die erfindungsgemäß eingesetzte Beschichtungszusammensetzung kann in der Lackierungsindustrie übliche Additive enthalten, z.B. die Rheologie und das Trocknungsverhalten kontrollierende Additive, Benetzungs- und Verlaufshilfsmittel, Entschäumer, Lösungsmittel, Farbstoffe und Pigmente. Als Lösungsmittel eignen sich z.B. Alkohole und/oder Glycole, beispielsweise ein Gemisch aus Ethanol, Isopropanol und Butylglycol. Ferner können handelsübliche Mattierungsmittel, z.B. mikroskalige SiO₂- oder keramische Pulver zugesetzt werden, um mattierte Schichten mit Anti-Fingerprint-Eigenschaften zu erreichen. Sofern eingesetzt, können die Hydrolyse und Polykondensation der Silane in Anwesenheit von Mattierungsmitteln, z B. mikroskaligen SiO₂- oder keramischen Pulvern erfolgen. Diese können aber auch später zur Beschichtungszusammensetzung zugegeben werden.

Die erfindungsgemäß eingesetzte Beschichtungszusammensetzung kann nach üblichen Beschichtungsmethoden auf die metallische Oberfläche aufgebracht werden. Anwendbare Techniken sind zum Beispiel das Tauchen, Gießen, Fluten, Schleudern, Sprühen, Aufstreichen oder der Siebdruck. Besonders bevorzugt werden automatisierte Beschichtungsverfahren wie Flachspritzen, Einsatz von Sprührobotern und automatisches Sprühern mit maschinell geführten rotierenden oder schwenkenden Substraten. Dabei können zum Verdünnen übliche Lösungsmittel, wie sie in der Lackierungsindustrie gebräuchlich sind, verwendet werden.

Die auf die metallische Oberfläche aufgetragene Beschichtungszusammensetzung wird bei Raumtemperatur bzw. leicht erhöhter Temperatur von bis zu 100°C, insbesondere bis zu 80°C, getrocknet, bevor sie thermisch zu einer glasartigen Schicht verdichtet wird. Die thermische Verdichtung kann gegebenenfalls auch durch IR- oder Laser-Strahlung erfolgen. Falls gewünscht kann auf die so hergestellte (in der Regel transparente und farblose) glasartige Schicht (mindestens) eine weitere (glasartige) Schicht aufgebracht werden, zum Beispiel eine funktionelle glasartige Schicht, wie sie in der internationalen Patentanmeldung PCT/EP94/03423 (entsprechend EP-A-729442) oder in der DE-A-19645043 beschrieben ist. Bei dieser funktionellen glasartigen Schicht kann es sich z.B. um eine farbige Schicht handeln. Da derartige gefärbte glasartige Schichten mit Hilfe einer Beschichtungszusammensetzung hergestellt werden, die zum Beispiel Precursoren für Metallkolloide enthalten, läßt sich dadurch auch verhindern, dass die metallische Oberfläche die Reaktionen der Metallkolloid-Precursoren etc. beeinträchtigt bzw. beeinflußt, da kein direkter Kontakt zwischen der metallischen Oberfläche und der gefärbten glasartigen Schicht vorliegt. Eine derartige gefärbte glasartige Schicht kann auf der erfindungsgemäß hergestellten glasartigen Schicht dadurch vorgesehen werden, dass man den erfindungsgemäß auf der metallischen Oberfläche vorgesehenen Überzug vor seiner thermischen Verdichtung (und vorzugsweise nach seiner Trocknung bei Raumtemperatur oder erhöhter Temperatur) mit der Beschichtungszusammensetzung für die gefärbt glasartige Schicht versieht und die beiden Überzüge dann gemeinsam thermisch verdichtet.

Die metallische Oberfläche erhält erfindungsgemäß eine witterungsbeständige, korrosionsinhibierende, kratzunempfindliche und gegen Chemikalien beständige Beschichtung, die insbesondere auch Verschmutzungen, z.B. durch Fingerabdrücke, Wasser, Öl, Fett, Tenside und Staub, vermeiden hilft.

Das folgende Beispiel erläutert die Erfindung ohne sie zu beschränken.

### Beispiel

Ein Alkalisilikat-Beschichtungssol wird hergestellt und auf gestanzte Edelstahlbleche im Sprühverfahren aufgetragen. Die beschichteten Bleche werden nach Trocknung bei Raumtemperatur in einem Vakuumofen folgendermaßen thermisch verdichtet:
1. Stufe: bis 120°C mit einer Aufheizrate von 5 K / min unter Evakuieren bis zu einem Druck < 2,5 mbar.
2. Stufe: bis 560°C mit einer Aufheizrate von 5 K / min in Stickstoffatmosphäre. Nach einer Haltezeit von 60 min wird in dieser Atmosphäre bis zur Entnahme aus dem Ofen mit ca. 10 K / min abgekühlt.

Die so hergestellten Beschichtungen sind völlig farblos und transparent. Sie sind sehr kratzfest (< 150 µm im IEC-Test mit 20 N und Wolframcarbidspitze, 1 mm Radius) und abriebbeständig (Crockmetertest mit Scotch Brite mit abrasivem Medium, 1 kg Last, 500 Zyklen ohne visuell erkennbare Oberflächenbeschädigung). Diese Eigenschaften bleiben auch nach 10stündigem Kochen in Wasser erhalten. Die Schichten sind kaltverformbar bis zu einem zweidimensionalen Radius von 5 mm.

## Patentansprüche

1. Metallisches Substrat mit einer verformbaren glasartigen Beschichtung, erhältlich durch
Auftragen eines Alkalisilikat-haltigen Beschichtungssols auf das Substrat,
Trocknen der aufgetragenen Beschichtungszusammensetzung bei einer Temperatur von bis zu 100°C und
thermische Verdichtung der so erhaltenen Schicht in einem zweistufigen Wärmebehandlungsverfahren, wobei die Wärmebehandlung in der ersten Stufe im Vakuum bei einem Restdruck ≤ 15 mbar durchgeführt wird und in der zweiten Stufe die weitere Verdichtung in einer sauerstoffarmen Atmosphäre bis zur vollständigen Verdichtung unter Ausbildung einer glasartigen Schicht durchgeführt wird.

2. Metallisches Substrat mit einer verformbaren glasartigen Beschichtung nach Anspruch 1, **dadurch gekennzeichnet, dass** die erste Wärmebehandlungsstufe bei einer Endtemperatur bis zu 500°C, durchgeführt wird.

3. Metallisches Substrat mit einer verformbaren glasartigen Beschichtung nach Anspruch 1 oder 2, **dadurch gekennzeichnet, dass** die zweite Wärmebehandlungsstufe bei einer Endtemperatur im Bereich von 400 bis 600°C durchgeführt wird.

4. Metallisches Substrat mit einer verformbaren glasartigen Beschichtung nach einem der Ansprüche 1 bis 3, **dadurch gekennzeichnet, dass** die zweite Wärmebehandlungsstufe in einer Inertgasatmosphäre durchgeführt wird.

5. Metallisches Substrat mit einer verformbaren glasartigen Beschichtung nach einem der Ansprüche 1 bis 4, **dadurch gekennzeichnet, dass** die Abkühlphase des wärmebehandelten Substrats in einer sauerstoffhaltigen oder sauerstoffarmen Atmosphäre durchgeführt wird.

6. Metallisches Substrat mit einer verformbaren glasartigen Beschichtung nach einem der Ansprüche 1 bis 5, **dadurch gekennzeichnet, dass** das Alkalisilikathaltige Beschichtungssol erhältlich ist durch ein Verfahren umfassend die Hydrolyse und Polykondensation eines oder mehrerer Silane der allgemeinen Formel (I)
RₙSi₄₋ₙ (I)
worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere,
in Anwesenheit von
a) mindestens einer Verbindung aus der Gruppe der Oxide und Hydroxide der Alkali- und Erdalkalimetalle und gegebenenfalls
b) zugesetzten nanoskaligen SiO₂-Teilchen.

7. Metallisches Substrat mit einer verformbaren glasartigen Beschichtung nach Anspruch 6, **dadurch gekennzeichnet, dass** das Alkali- oder Erdalkalimetalloxid bzw. -hydroxid in einer solchen Menge eingesetzt wird, dass das Atomverhältnis Si: Alkali- oder Erdalkalimetall im Bereich von 20:1 bis 7:1 liegt.

8. Metallisches Substrat mit einer verformbaren glasartigen Beschichtung nach Anspruch 6, **dadurch gekennzeichnet, dass** der Durchschnittswert von n in den Ausgangssilanen der allgemeinen Formel (I) 0,2 bis 1,5 beträgt.

9. Metallisches Substrat mit einer verformbaren glasartigen Beschichtung nach einem der Ansprüche 1 bis 8, **dadurch gekennzeichnet, dass** die Beschichtung eine Schichtdicke von 1 bis 6 µm hat.

10. Metallisches Substrat mit einer verformbaren glasartigen Beschichtung nach einem der vorhergehenden Ansprüche, **dadurch gekennzeichnet, dass** es einer Kaltverformung unterzogen worden ist.

11. Verfahren zur Herstellung eines metallischen Substrats mit einer verformbaren glasartigen Beschichtung, umfassend
das Auftragen eines Alkalisilikat-haltigen Beschichtungssols auf das Substrat,
das Trocknen der aufgetragenen Beschichtungszusammensetzung bei einer Temperatur von bis zu 100°C und
die thermische Verdichtung der so erhaltenen Schicht in einem zweistufigen Wärmebehandlungsverfahren, wobei die Wärmebehandlung in der ersten Stufe im Vakuum bei einem Restdruck ≤ 15 mbar durchgeführt wird und in der zweiten Stufe die weitere Verdichtung in einer sauerstoffarmen Atmosphäre bis zur vollständigen Verdichtung unter Ausbildung einer glasartigen Schicht durchgeführt wird.

## Claims

1. A metallic substrate having a deformable vitreous coating, obtainable by
applying an alkali silicate containing coating sol to the substrate,
drying the coating composition applied at a temperature of up to 100°C, and
thermally densifying the layer thus obtained in a two-stage heat treatment process, the heat treatment being carried out, in the first stage, in a vacuum at a residual pressure of ≤ 15 mbar and, in the second stage, further densification being carried out in a low-oxygen atmosphere up to full densification with formation of a vitreous layer.

2. The metallic substrate having a deformable vitreous coating according to claim 1, **characterized in that** the first heat treatment stage is carried out at an end temperature of up to 500°C.

3. The metallic substrate having a deformable vitreous coating according to claim 1 or 2, **characterized in that** the second heat treatment stage is carried out at an end temperature in the range from 400 to 600°C.

4. The metallic substrate having a deformable vitreous coating according to one of claims 1 to 3, **characterized in that** the second heat treatment stage is carried out in an inert gas atmosphere.

5. The metallic substrate having a deformable vitreous coating according to one of claims 1 to 4, **characterized in that** the cooling phase of the heat-treated substrate is carried out in an oxygen-containing or low-oxygen atmosphere.

6. The metallic substrate having a deformable vitreous coating according to one of claims 1 to 5, **characterized in that** the alkali silicate containing coating sol is obtainable by a process comprising the hydrolysis and polycondensation of one or more silanes of the general formula (I)
RₙSiX₄₋ₙ (I)
in which the groups X, identical or different from one another, are hydrolyzable groups or hydroxyl groups, the radicals R, identical or different from one another, are hydrogen, alkyl, alkenyl and alkynyl groups having up to 4 carbon atoms and aryl, aralkyl and alkaryl groups having from 6 to 10 carbon atoms, and n is 0, 1 or 2, with the proviso that at least one silane where n = 1 or 2 is used, or oligomers derived therefrom,
in the presence of
a) at least one compound from the group of the oxides and hydroxides of the alkali metals and alkaline earth metals and optionally
b) added nanoscale SiO₂ particles.

7. The metallic substrate having a deformable vitreous coating according to claim 6, **characterized in that** the alkali metal oxide or alkaline earth metal oxide or alkali metal hydroxide or alkaline earth metal hydroxide is used in such an amount that the atomic ratio of Si : alkali metal or alkaline earth metal is in the range from 20:1 to 7:1.

8. The metallic substrate having a deformable vitreous coating according to claim 6, **characterized in that** the average value of n in the starting silanes of the general formula (I) is from 0.2 to 1.5.

9. The metallic substrate having a deformable vitreous coating according to one of claims 1 to 8, **characterized in that** the coating has a layer thickness of from 1 to 6 µm.

10. The metallic substrate having a deformable vitreous coating according to one of the preceding claims, **characterized in that** it has been subjected to cold deformation.

11. A process for the manufacture of a metallic substrate having a deformable vitreous coating, comprising
applying an alkali silicate containing coating sol to the substrate,
drying the coating composition applied at a temperature of up to 100°C, and
thermally densifying the layer thus obtained in a two-stage heat treatment process, the heat treatment being carried out, in the first stage, in a vacuum at a residual pressure of ≤ 15 mbar and, in the second stage, further densification being carried out in a low-oxygen atmosphere up to full densification with formation of a vitreous layer.

## Revendications

1. Substrat métallique comprenant un revêtement vitreux déformable, pouvant être obtenu par
application d'un sol de revêtement contenant un silicate alcalin sur le substrat,
séchage de la composition de revêtement appliquée à une température pouvant aller jusqu'à 100°C et
compression thermique de la couche ainsi obtenue au cours d'un procédé de traitement thermique en deux étapes, dans laquelle le traitement thermique au cours de la première étape est réalisé sous vide à une pression résiduelle ≤ 15 bar et la compression ultérieure dans une atmosphère pauvre en oxygène au cours de la deuxième étape est réalisée jusqu'à la compression complète permettant de former une couche vitreuse.

2. Substrat métallique comprenant un revêtement vitreux déformable selon la revendication 1, **caractérisé en ce que** la première étape de traitement thermique est réalisée à une température finale pouvant aller jusqu'à 500°C.

3. Substrat métallique comprenant un revêtement vitreux déformable selon la revendication 1 ou 2, **caractérisé en ce que** la deuxième étape de traitement thermique est réalisée à une température finale située dans la plage de 400 à 600°C.

4. Substrat métallique comprenant un revêtement vitreux déformable selon l'une des revendications 1 à 3, **caractérisé en ce que** la deuxième étape de traitement thermique est réalisée dans une atmosphère de gaz inerte.

5. Substrat métallique comprenant un revêtement vitreux déformable selon l'une des revendications 1 à 4, **caractérisé en ce que** la phase de refroidissement du substrat traité thermiquement est réalisée dans une atmosphère contenant de l'oxygène ou pauvre en oxygène.

6. Substrat métallique comprenant un revêtement vitreux déformable selon l'une des revendications 1 à 5, **caractérisé en ce que** le sol de revêtement contenant le silicate alcalin peut être obtenu par un procédé comprenant l'hydrolyse et la polycondensation d'un ou de plusieurs silanes de formule générale (I)
RₙSiX₄₋ₙ (I)
dans laquelle les groupes X, identiques ou différents les uns des autres, sont des groupes hydrolysables ou des groupes hydroxyle, les radicaux R, identiques ou différents les uns des autres, représentent un hydrogène, des groupes alkyle, alcényle et alcinyle ayant jusqu'à 4 atomes de carbone et des groupe aryle, aralkyle et alkaryle ayant de 6 à 10 atomes de carbone et n représente 0, 1 ou 2, à la condition qu'au moins un silane ayant n = 1 ou 2 soit utilisé, ou des oligomères qui en sont dérivés,
en présence de
a) au moins un composé du groupe des oxydes et hydroxydes des métaux alcalins et alcalino-terreux et le cas échéant
b) des particules de SiO₂ nanoscalaires additionnées.

7. Substrat métallique comprenant un revêtement vitreux déformable selon la revendication 6, **caractérisé en ce que** l'oxyde ou l'hydroxyde de métal alcalin ou alcalinoterreux est mis en oeuvre en une telle quantité que le rapport atomique Si : métal alcalin ou alcalino-terreux est situé dans la plage de 20 : 1 à 7 : 1.

8. Substrat métallique comprenant un revêtement vitreux déformable selon la revendication 6, **caractérisé en ce que** la valeur moyenne de n dans les silanes de départ de formule générale (I) est de 0,2 à 1,5.

9. Substrat métallique comprenant un revêtement vitreux déformable selon l'une des revendications 1 à 8, **caractérisé en ce que** le revêtement possède une épaisseur de couches de 1 à 6 *µ*m.

10. Substrat métallique comprenant un revêtement vitreux déformable selon l'une des revendications précédentes, **caractérisé en ce qu'**il a été soumis à une déformation à froid.

11. Procédé de fabrication d'un substrat métallique comprenant un revêtement vitreux déformable, comprenant :
l'application d'un sol de revêtement contenant un silicate alcalin sur le substrat,
le séchage de la composition de revêtement appliquée à une température pouvant aller jusqu'à 100°C et
la compression thermique de la couche ainsi obtenue au cours d'un procédé de traitement thermique en deux étapes, dans laquelle le traitement thermique au cours de la première étape est réalisé sous vide à une pression résiduelle ≤ 15 bar et la compression ultérieure dans une atmosphère pauvre en oxygène au cours de la deuxième étape est réalisée jusqu'à la compression complète permettant de former une couche vitreuse.
